Europäisches Patentamt

**European Patent Office**

Office européen des brevets

(11) Publication number: **0 026 993**

**B1**

(12) **EUROPEAN PATENT SPECIFICATION**

(45) Date of publication of patent specification: **02.01.86**

(21) Application number: **80303254.9**

(22) Date of filing: **16.09.80**

(51) Int. Cl.⁴: **B 65 G 19/04,** B 65 G 15/14, B 65 G 37/00, A 01 D 87/00

(54) **Elevator.**

(30) Priority: **26.09.79 GB 7933347**

(43) Date of publication of application: **15.04.81 Bulletin 81/15**

(45) Publication of the grant of the patent: **02.01.86 Bulletin 86/01**

(84) Designated Contracting States: **AT BE CH DE FR GB IT LI LU NL SE**

(56) References cited:
**DD-A- 16 593**
**DE-B-1 217 857**
**DE-C- 561 066**
**DE-C-1 128 804**
**DE-U-1 702 655**
**FR-A- 395 615**
**FR-A- 647 597**
**GB-A- 441 077**
**GB-A- 462 003**
**US-A-1 707 725**
**US-A-2 254 116**

(73) Proprietor: **Vinson, Victor**
**6 Barnwell**
**Peterborough (GB)**

(72) Inventor: **Vinson, Victor**
**6 Barnwell**
**Peterborough (GB)**

(74) Representative: **Davy, John Raymond et al**
**CARPMAELS & RANSFORD 43, Bloomsbury Square**
**London, WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an elevator. The elevator is particularly useful for elevating farm produce, including granular material, from a hopper to a raised store. However, it may be used for elevating other articles.

A conventional grain elevator may comprise an auger-shaped member which is axially rotated by a drive motor to move grain from a lower to an upper end. Such an elevator may use a 6 kilowatt (8 h.p.) motor to elevate grain at a rate of 40 tonnes/hour. Such an elevator is not particularly efficient with regard to the rate at which grain is elevated by a motor a given power. Moreover, it can damage produce by its grinding action, especially when used to convey beans or peas.

US—A—1707725 described a loading device comprising the technical features mentioned in the first part of claim 1 which collects hay when the device is propelled over a field. As the device is moved over the field, the hay is swept into the inlet of an elevator (18) by an upper pick-up drum (44), which is provided with blades (45), and by a lower pick-up drum, having a series of radial flexible bristles (38). These drums are situated at the lower ends of respective endless chain conveyors (21, 28), which form separate, parallel entrainments that are spaced apart from one another. The drums are spaced apart, at the inlet of the elevator, to collect the hay. A disadvantage of this loading device is that it is designed to collect hay whilst moving and so it would not pick up material when stationary. More importantly, because of the spacing between the chain conveyors and the drums, the device would not pick up fine produce, such as granular material, since there is nothing to induce such material to enter the inlet and to rise up the elevator.

DE—C—1128804 describes an elevator in which an endless flexible inner belt, made of rubber, is mounted within an outer belt (3) to which are affixed a plurality of spaced carriers (4). Both belts are tensioned over the extent of travel and upper ascending runs of the belts are supported in contact with one another. As the belts travel up the ascending section, the flexible rubber inner belt is deformed around the outer belt and its carriers, to provide a U-sectioned backing. Material is fed onto the ascending upper runs of the belts which is thereby carried upwardly on the carriers. The material carried by the belts is deposited into an outlet (7) at the top of the elevator. The elevator depends on an 'ascending bucket' mode of operation, wherein the bottoms of the buckets are formed by the carriers, and the sides of the buckets are formed by portions of the flexible inner belt. Besides the complexity of its construction, this known elevator would be more susceptible to jamming and wear compared with the invention, particular view of the way in which the flexible rubber inner belt is continually deformed to 'fit around' the outer belt and its carriers.

GB—A—441077 describes a band conveyor in which an upper, freely sagging, flexible, endless band (2) is mounted above a lower, endless conveyor band (1). The upper band is disposed and adapted for loading itself on the lower band and is situated above the lower band to provide the necessary loading. The upper band is also driven by an additional driving band (13), which incorporates a tensioning device. The known arrangement is far more cumbersome in its design and operation than the elevator of the invention, and the feed section is more exposed than the elevator of the present invention and hence it is less safe in operation. Moreover, since endless bands are employed in the known arrangement, it is susceptible to jamming since it has no self cleaning action.

UK patent specification No. 462003 describes an elevator similar to the latter arrangement, except that no ramp section is apparently employed for supporting the upper run of the conveyor belt. Instead, the lower belt is configured by guide tracks in which rollers are guided whereby the conveyor can be constrained to pass in a suitable curve from the feed section to the main rising section. Besides having the disadvantages of the latter arrangement, the absence of a ramp section would prevent the elevator being used with material which could pass through gaps in a slatted conveyed belt, e.g. grain, since this would simply pour through the conveyor belt.

US patent specification No. 2254116 describes a belt elevator in which a solid inner belt is mounted within a solid outer belt. Loose material to be elevated is fed from a chute into a V-shaped space which precedes a large roller. Means are provided for tensioning the belts so that the belts act to clamp the loose material therebetween. This arrangement, has certain disadvantages. For example, the material to be elevated falls downwardly into the nip between the inner and outer belts, which belts are tensioned around the lower roller. The material to be elevated is therefore sandwiched and clamped between confronting belts and this can damage soft material. In addition, and as taught in the specification, some materials such as lime, cement, flour, etc., can stick to the solid belts and it is necessary to employ resiliently pressed scrapers which are applied to one of both sides of the belts at the discharge point. A pair of scrapers is used at the discharge point and the elevated material needs to be diverted laterally from the diverging opening of the belts so as to fall out into a discharge chute. The arrangement is therefore complicated and subject to jamming.

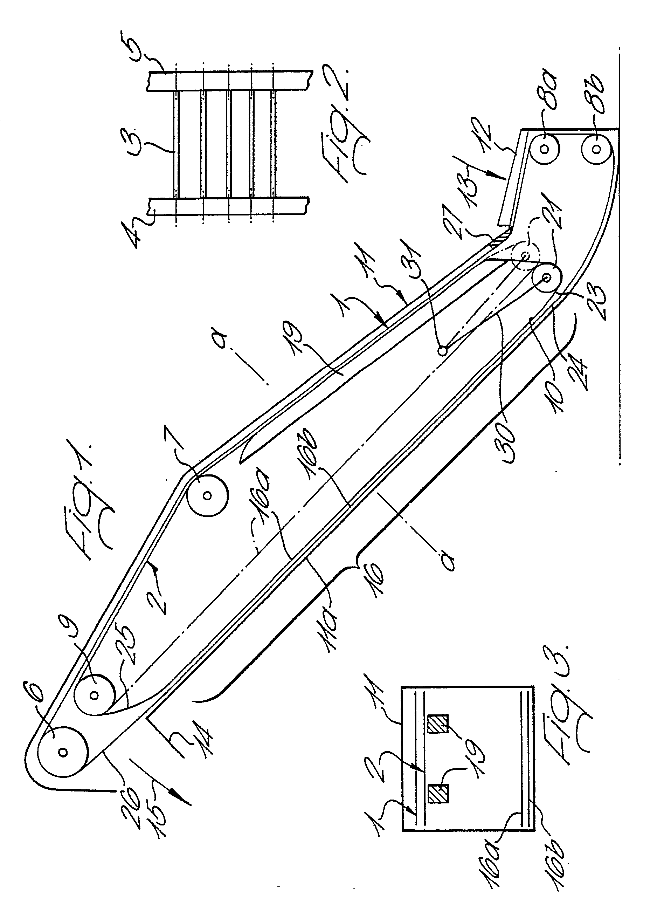

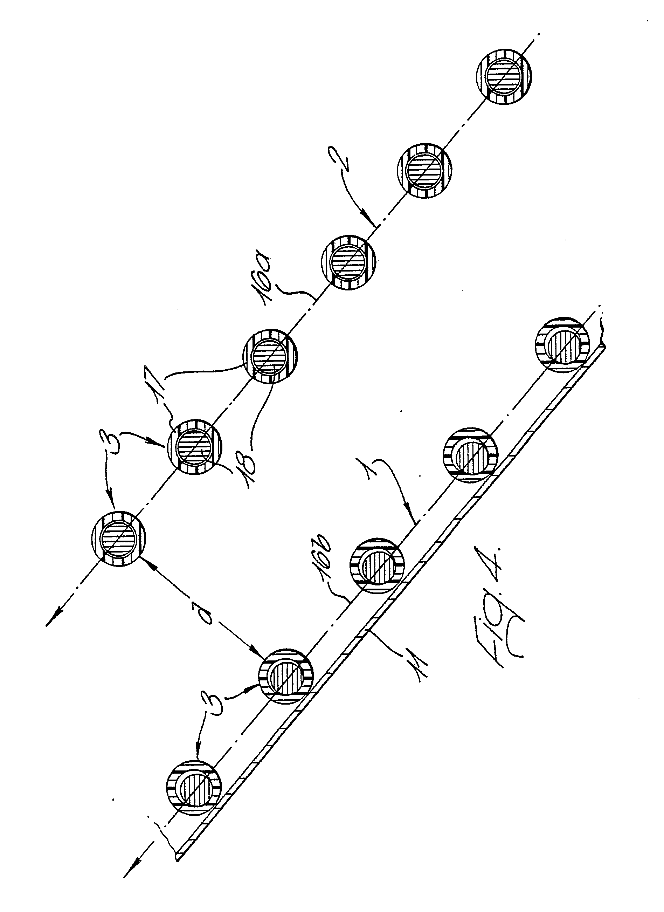

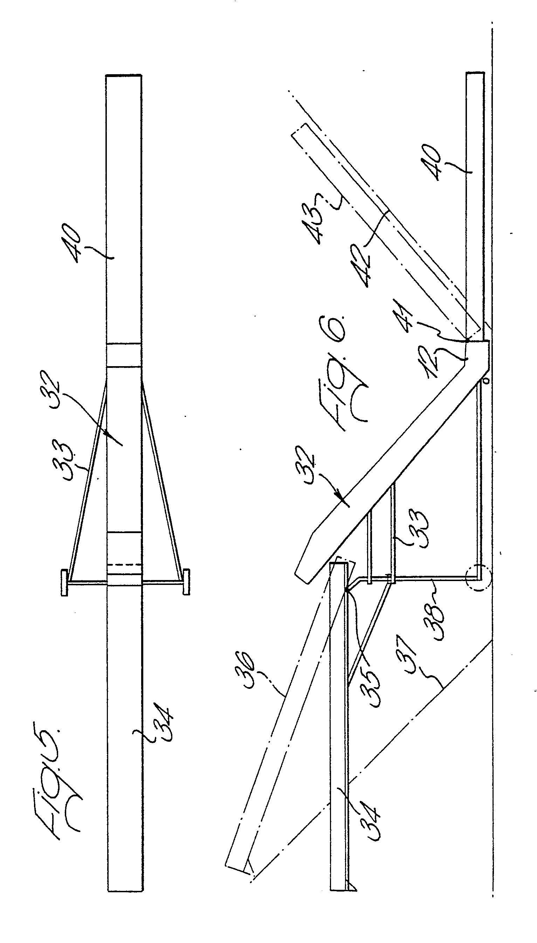

DE—U—1702655 describes a type of conveyor in which a first belt forms a trough and a second belt is formed by transverse members attached to endless ropes or chains. The second belt has a section which is normally tensioned over an adjacent section of the trough-shaped or first belt to prevent slippage of material transported on the upper run or trough of the first belt. Two different arrangements are shown (Figs 2 and 4) for tensioning the belts in which the transverse members of the second belt run above and within the trough. Besides the disadvantage of requiring a tensioning arrangement, the use of a solid belt can lead to jamming. Moreover, loading the conveyor with material is not facilitated in either of the belt arrangements and the material conveyed by the trough must be carried to a remote end of the upper run before falling off the conveyor.

The present invention seeks to provide an efficient elevator, which is compact in design, safe to use, and not susceptible to jamming.

The invention provides an elevator for transporting produce including granular material, the elevator comprising a pair of continuous entrainments which are supported so that a section of one entrainment lies adjacent a corresponding section of the other entrainment, said sections extending longitudinally of a ramp section for retaining said produce thereon which is transported by the elevator, said ramp section extending intermediate an inlet and an outlet for said produce transported by the elevator, and drive means to drive said entrainments simultaneously, characterised in that one of said entrainments is mounted, as an inner entrainment, within the other or outer entrainment; the inner entrainment is supported so that its lower end is floating, and said section of the inner entrainment is freely movable relative said section of the outer entrainment such that said section of the inner entrainment normally contacts said section of the outer entrainment over said ramp section; the inner and outer entrainments are perforate to enable said produce to pass therethrough, a hopper being provided at the inlet and the outer entrainment being supported so that its lower end is spaced from the lower end of the inner entrainment to define the inlet and so that the lower end of the outer entrainment passes around the interior of the hopper to pick up said produce therein, said produce falling through the perforate outer entrainment into the hopper and onto the lower end of the ramp section where said produce is initially transported by the lower end section of the outer entrainment towards the lower end of the inner entrainment, the lower end of the inner entrainment being free to move away from said section of the outer entrainment to accommodate a rising column of said produce which is thereby transported to the outlet, said produce passing through the perforate outer entrainment adjacent the outlet.

An advantage of locating one of the entrainments within the other is that a compact arrangement is possible whereby both entrainments can be supported in the same protective casing. This keeps dust, for example, to a minimum and improves the safety factor. An advantage of using perforate entrainments, which may comprise spaced rods or rollers that are supported, at each side, by respective continuous bands, is that the elevator is self-cleaning and this reduces the risk of jamming. The hopper arrangement of the invention also facilitates loading the conveyor at its lower end.

Preferably, the lower end of the inner entrainment is shaped to form a converging inlet to assist initial elevation, and the upper end of the inner entrainment is shaped to form a diverging outlet to assist in releasing the produce or articles at the outlet, the upper ends of the inner and outer entrainments being supported and simultaneously driven by respective spaced drive means preferably. The ramp section is preferably part of the casing which encloses both entrainments apart from the inlet and outlet.

In operation, an upper end of the elevator is raised with respect to the lower end so that the elevating section makes a required angle with the horizontal. In some cases this may exceed the angle of repose of the material which is transported. The angle of repose may be determined with regard, for example, to a slope at which the material at the top of a heap begins to roll down the inclined side.

A further advantage of the elevator according to the invention is rate of material transport and its power requirements compared with the known auger-type of elevator. For example, with a 1.5 kilowatt (2 h.p.) motor up to a 100 tonnes/hour of grain can be elevated to the same height.

A preferred embodiment of the invention will now be described with reference to the accompanying drawings in which:

Fig. 1 is a schematic side elevation of an elevator according to the invention;

Fig. 2 is a schematic plan view of part of one of the entrainments used in the elevator of Fig. 1;

Fig. 3 is a section on line a—a of Fig. 1;

Fig. 4 is an enlarged view through a section of the entrainments in the elevator of Fig. 1 and

Figs. 5 and 6 are respectively plan and elevational views of the elevator of Fig. 1 with auxiliary conveying systems.

Referring to Figs 1—3 an elevator comprises two continuous entrainments 1, 2 each in the form of an endless belt or chain with spaced members 3 attached at each side of an endless band 4, 5. Each member 3 may be a rod or a shaft passing freely through a plastic sleeve which acts as a roller, the rods (in either case) being secured at each end to the respective bands 4, 5. Entrainment 1 encloses a region in which entrainment 2 is mounted. The outer entrainment 1 passes over idlers 7, 8a and 8b. The idlers may be arranged in pairs, one at each side of the entrainment adjacent the bands 4, 5. The idlers may comprise wheels, rollers, or sprockets. Pairs of sprockets 6 and 9 (only one of each being shown in Fig 1) engage both the outer and the inner entrainments 1, 2. The sprockets 9 are fast with the shaft of an electric motor or an internal combustion engine (not shown). Sprockets 9 and 6 are coupled together. The upper runs of the entrainments remain fairly taut between these sprockets and idler 7 and are supported by members 19 between idler 7 and a lower end 10 of the inner entrainment 2. However, the inner entrainment is slack over the lower run between the lower end 10 and the sprockets 9. The lower end 10 may float freely or pass around a roller, idler or sprockets 21 (as shown) supported on a radius arm or arms 30 pivoted to the casing at 31. Alternatively, the roller, idler or sprockets 21 are supported on a shaft which is guided for lateral movement (with respect to the direction of transport) in slots or grooves at each side of the casing. However, neither the radiused arms, nor the grooves or slots (with the respective idlers) are essential since the lower end of the inner entrainment can float freely.

The outer entrainment 1 passes upwardly from idler 8b to idler 6 adjacent a planar member or a part 11a of a casing 11 which surrounds the entrainments. At its lower end, casing 11 forms a hopper 12 to retain material which is poured in at the point designated by an arrow 13. Since the entrainment 1 comprises spaced roller 3, the material passes through the rods or rollers into hopper 12.

An upper end 14 of the casing 11 is turned over to form an outlet for material which leaves the elevator as indicated by an arrow 15.

A section of the elevator which extends between the drive sprocket 9 and the lower end 10 of entrainment 2 is designated by numeral 16. The section transports the material from the hopper 12 to the outlet 14. When the elevator is at rest, section 16a of the inner entrainment 2 sags towards the section 16b of the outer entrainment 1. However, when the drive motor is started and the entrainments are rotating at normal speed, material commences to rise on section 16b of the outer entrainment. Section 16a of the inner entrainment then moves away from section 16b (as indicated by the broken lines in Fig 1) as the material builds up to a rising column between the sections 16a and 16b. The section 16a of the inner entrainment tends to take up a natural spacing from the section 16b of the outer entrainment during elevation.

As best seen in Figs 1 and 3, members 19 extend beneath a section of the upper runs of entrainments 1, 2 and serve as guides which prevent slackness. As seen in Fig 1, a rubbing block 27 guides the outer entrainment 1 on its descending path before it enters hopper 12. When material is loaded into the elevator, the weight of the material forces the outer entrainment to leave the rubbing block so little or no wear take place in use.

Referring to Fig 4, this shows a part of the section 16 in greater detail in which rollers 3 of the outer entrainment 1 rotate in contact with the casing 11. Rollers 3 of the inner entrainment 2 are spaced by a distance d from the rollers of the outer entrainment. Each roller comprises an outer plastic sleeve 17 which is freely rotatable on an inner metal rod or shaft 18. The bands 4, 5 have been omitted for clarity.

The lower initial section 23 of the inner entrainment 2 is inclined away from a corresponding section 24 of the outer entrainment 1, so as to form a converging inlet for e.g., grain in the hopper 12. Also an upper final section 25 of the inner entrainment 2 is inclined away from a corresponding section 26 of the outer entrainment 1 to form a diverging outlet. This arrangement assists in feeding the grain to the elevator at the lower end and in releasing it at the upper end.

Both the inner and outer entrainments are perforate, because perforate entrainments provide a self-cleaning action which reduces the risk of jamming.

In a prototype embodiment of the invention, a 1.5 kilowatt (2 h.p.) motor was used with a shaft speed of 1500 r.p.m. reduced through a lay-shaft (or reduction gear box) to 120—150 r.p.m. for driving the entrainments at approximately 37—46 metres/min (120—150 ft/min). This elevated wheat with a moisture content of 16% at a rate of 80—100 tonne/hour.

The elevator can be used for transporting farm produce, for example, grain beans and peas and also for transporting any granular material which is smaller than the pitch of the entrainment (i.e. distance between the members 3).

One surprising effect of the elevator described above is its efficient transport of granular material which is smaller than the pitch of the inner and outer entrainments. This material passes easily through the spaces between the members 3 when poured into the hopper 12 and yet is transported up the elevating section as section 16a of the inner entrainment 2 moves away from the section 16b of the outer entrainment 1. Preferably, only a running clearance is provided between the sides of bands 4, 5 and the sides of the casing 1.

Referring to Figs 5 and 6, this shows an elevator 32, according to the invention, which is mounted on a wheeled chassis 33. A conveyor 34 is hingedly supported at 35 on the chassis 33 and it may be elevated by known hydraulic means, to a position as shown by the broken lines 36. The conveyor 34 includes a single entrainment (not shown), which may be of similar material to that used for the entrainments 1, 2 in the elevator. This entrainment passes over idlers and sprockets (not shown) extending along the length of a trough-like casing forming the conveyor 34. Thus, as material leaves the top of the elevator 32 it falls onto one end of the conveyor 34 and it is then carried along the conveyor to exit at the far end to form a heap 37. Leg 38 of the chassis 33 may be pivotally mounted so as to enable the far end of conveyor 34 to be swung on an arc to direct the discharge in different directions.

Figs 5 and 6 also show a rear conveyor 40 which is hingedly attached to the conveyor 32 at 41. Conveyor 6 is of similar construction to conveyor 34 except that the continuous entrainment is mounted in an inverted trough and it is used to scrape material from a heap 42 into the hopper end 12 of the elevator. The conveyor 40 is shown elevated into a position indicated by the broken lines 43 where it rests against the side of the heap 42 (at its angle of repose). As material is scraped down towards the hopper end 12, more material tends to fill the "gap" since it pours down from the top and the sides of the heap. The conveyor 40 is detachable from the elevator 32 and is used only when unloading from store.

## Claims

1. An elevator for transporting farm produce including granular material, the elevator comprising a pair of continuous entrainments (1, 2) which are supported so that a section (16a) of one entrainment (2) lies adjacent a corresponding section (16b) of the other entrainment (1), said sections (16a, 16b) extending longitudinally of a ramp section (11a) for retaining said produce thereon which is transported by the elevator, said ramp section extending intermediately an inlet (12) and an outlet (14) for said produce transported by the elevator, and drive means (6, 9) to drive said entrainments simultaneously, characterised in that one of said entrainments (1, 2) is mounted, as an inner entrainment (2), within the other or outer entrainment (1); the inner entrainment is supported so that its lower end (10) is floating, and said section (16a) of the inner entrainment (2) is freely movable relative said section (16b) of the outer entrainment (1) such that said section (16a) of the inner entrainment (2) normally contacts said section (16b) of the outer entrainment (1) over said ramp section (11a); the inner and outer entrainment (1, 2) are perforate to enable said produce to pass therethrough, a hopper being provided at the inlet (12) and the outer entrainment (1) being supported so that its lower end is spaced from the lower end (10) of the inner entrainment to define the inlet (12) and so that the lower end of the outer entrainment (1) passes around the interior of the hopper to pick up said produce therein, said produce falling through the perforate outer entrainment (1) into the hopper and onto the lower end of the ramp section (11a) where said produce is initially transported by the lower end section of the outer entrainment (1) towards the lower end (10) of the inner entrainment (2), the lower end (10) of the inner entrainment (2) being free to move away from section (16b) of the outer entrainment (1) to accommodate a rising column of said produce which is thereby transported to the outlet (14), said produce passing through the perforate outer entrainment (1) adjacent the outlet (14).

2. An elevator according to claim 1, characterised in that the lower end (10) of the inner entrainment (2) passes around rotatable means (21) supported on a pivoted radius arm (30, 31).

3. An elevator according to any one of the preceding claims, characterised in that the inner entrainment (2) is guided over idlers and drive sprockets (9, 21) so that its section (16a) which extends longitudinally of ramp section (11a), is slack and upper runs of the inner entrainment (2) and the outer entrainments (1, 2) pass over guide members (19) to prevent sag.

4. An elevator according to any one of the preceding claims, characterised in that an upper end (25) of the inner entrainment (2) is shaped to form a diverging outlet (25, 26) to assist in releasing said granular material or farm produce at the outlet (15), the upper ends (25, 26) of the inner and outer entrainments (1, 2) being supported and simultaneously driven by respective spaced drive means (6, 9).

5. An elevator according to any one of the preceding claims, characterised in that the ramp section (11a) is part of a casing (11) which encloses both entrainments (1, 2) apart from the inlet (13) and outlet.

## Revendications

1. Elévateur pour transporter un produit agricole y compris un matériau granuleux, l'élévateur comprenant une paire de convoyeurs entraînés en continu (1, 2) qui sont supportés de telle sorte qu'une section (16a) de l'un des convoyeurs (2) soit adjacente à une section correspondante (16b) de l'autre convoyeur (1), lesdites sections (16a, 16b) s'étendant le long d'une section de rampe (11a) pour retenir sur celui-ci ledit produit qui est transporté par l'élévateur, ladite section de rampe s'étendant entre une entrée (12) et une sortie (14) pour ledit produit transporté par l'élévateur, et des moyens d'entraînement (6, 9) pour entraîner simultanément lesdits convoyeurs, caractérisé en ce que l'un desdits convoyeurs (1, 2) est monté, comme un convoyeur intérieur (2), dans l'autre convoyeur ou convoyeur extérieur (1); le convoyeur intérieur est supporté de telle sorte que son extrémité inférieure (10) flotte, et que ladite section (16a) du convoyeur intérieur (2) se déplace librement par rapport à ladite section (16b) du convoyeur extérieur (1) de telle sorte que ladite section (16a) du convoyeur intérieur (2) vienne normalement au contact de ladite section (16b) du convoyeur extérieur (1) sur ladite section de rampe (11a); les convoyeurs intérieur et extérieur (1, 2) sont perforés pour permettre audit produit de passer à travers, une trémie étant ménagée à l'entrée (12) et le convoyeur extérieur (1) étant supporté de telle sorte que son extrémité inférieure soit espacée de l'extrémité inférieure (10) du convoyeur intérieur pour délimiter l'entrée (12) et de telle sorte que l'extrémité inférieure du convoyeur extérieur (1) passe autour de l'intérieur de la trémie pour ramasser ledit produit qu'elle contient, ledit produit tombant à travers le convoyeur extérieur perforé (1) dans la trémie et sur l'extrémité inférieure de la section de rampe (11a) où ledit produit est transporté initialement par la section d'extrémité inférieure du convoyeur extérieur (1) vers l'extrémité inférieure (10) du convoyeur intérieur (2), l'extrémité inférieure (10) du convoyeur intérieur (2) pouvant s'éloigner librement de ladite section (16b) du convoyeur extérieur (1) pour s'adapter à une colonne montante dudit produit qui est alors transporté vers la sortie (14), ledit produit passant au travers du convoyeur extérieur perforé (1) adjacent à la sortie (14).

2. Un élévateur selon la revendication 1, caractérisé en ce que l'extrémité inférieure (10) du convoyeur intérieur (2) passe autour de moyens de rotation (21) montés sur un bras radial articulé (30, 31).

3. Un élévateur selon l'une quelconque des revendications précédentes, caractérisé en ce que le convoyeur intérieur (2) est guidé sur des poulies folles et des pignons d'entraînement denté (9, 21) de telle sorte que sa section (16a) qui s'étend le long de ladite section de rampe (11a) soit lâche et les bandes supérieures du convoyeur intérieur (2) et les convoyeurs extérieurs (1, 2) passent sur des éléments de guidage (19) pour empêcher le fléchissement.

4. Un élévateur selon l'une quelconque des revendications précédentes, caractérisé en ce que l'extrémité supérieure (25) du convoyeur intérieur (2) est conformée de manière à former une sortie divergeante (25, 26) pour faciliter la libération dudit matériau granuleux ou produit agricole à la sortie (15), les extrémités supérieures (25, 26) des convoyeurs intérieur et extérieur (1, 2) étant supportées et simultanément entraînées par des moyens d'entraînement respectifs espacés (6, 9).

5. Un élévateur selon l'une quelconque des revendications précédentes, caractérisé en ce que la section de raupe (11a) fait partie d'un châssis (11) qui renferme les deux convoyeurs (1 2) à l'exception de l'entrée (13) et de la sortie.


**Patentansprüche**

1. Elevator zum Fördern landwirtschaftlicher Produkte, insbesondere von körnigem Material, mit zwei kontinuierlich arbeitenden Mitnehmereinrichtungen (1, 2), die derart gelegert sind, daß ein Abshnitt (16a) einer der Mitnehmereinrichtungen (2) einem korrespondierenden Abschnitt (16b) der anderen Mitnehmereinrichtung (1) benachbart ist, wobei diese Abschnitte (16a, 16b) längs eines Rampenabschnitts (11a) zum Halten des von dem Elevator zu fördernden Produkts verlaufen, der sich zwischen einem Einlaß (12) zur Aufnahme des zu fördernden Produkts und einem Auslaß (14) zur Abgabe des Produkts erstreckt, sowie mit Antriebsmitteln (6, 9) für den simultanan Antrieb der genannten Mitnehmereinrichtungen (1, 2), dadurch gekennzeichnet, daß eine der Mitnehmereinrichtungen (1, 2) als innere Mitnehmereinrichtung (2) innerhalb der anderen oder äußeren Mitnehmereinrichtung (1) montiert ist, daß die innere Mitnehmereinrichtung (2) derart gelagert ist, daß ihr unteres Ende (10) schwimmend angeordnet ist und der genannte Abschnitt (16a) der inneren Mitnehmereinrichtung (2) relativ zu dem genannten Abschnitt (16b) der äußeren Mitnehmereinrichtung (1) derart frei bewegbar ist, daß der Abschnitt (16a) der inneren Mitnehmereinrichtung (2) normalerweise den korrespondierenden Abschnitt (16a) der äußeren Mitnehmereinrichtung (1) über dem Rampenabschnitt (11a) berührt,

daß die innere und die äußere Mitnehmereinrichtung (1 und 2) derart perforiert sind, daß das Produkt durch sie hindurchfallen kann, daß der Einlaß (12) mit einem Einfüllkasten ausgestattet ist, daß die äußere Mitnehmereinrichtung (1) so gelagert ist, daß zwischen ihrem unteren Ende und dem unteren Ende (10) der inneren Mitnehmereinrichtung (2) ein Abstand besteht, der den Einlaß (12) bestimmt und dieses untere Ende der äußeren Mitnehmereinrichtung (1) den Innenraum des Einfüllkastens umfährt, um das in diesem befindliche Produkt aufzunehmen, welches durch die perforierte äußere Mitnehmereinrichtung (1) in den Einfüllkasten und auf das untere Ende des Rampenabschnitts (11a) fällt, wo es zunächst von dem unteren Endabschnitt der äußeren Mitnehmereinrichtung (1) in Richtung in Richtung auf das untere Ende (10) der inneren Mitnehmereinrichtung (2) gefördert wird, und daß das untere Ende (10) der inneren Mitnehmereinrichtung (2) von dem genannten Abschnitt (16b) der äußeren Mitnehmereinrichtung (1) in Anpassung an eine wachsende Säule des Produkts frei wegbewegbar ist, wodurch das Produkt zu dem Auslaß (14) förderbar ist, und im Bereich des Auslasses (14) durch die perforierte äußere Mitnehmereinrichtung (1) hindurchfällt.

2. Elevator nach Anspruch 1, dadurch gekennzeichnet, daß das untere Ende (10) der inneren Mitnehmereinrichtung (2) um von einem Schwenkarm (30, 31) getragene drehbare Mittel (21) herum geführt ist.

3. Elevator nach einem der vorhergehenden Ansprüche, dadurch gekennzeichnet, daß die innere Mitnehmereinrichtung (2) über Leitrollen und Antriebsrollen (9, 21) derart geführt ist, daß ihr längs des genannten Rampenabschnitts (11a) verlaufender Abschnitt (16a) schlaff durchhängt, und daß die oberen Trums der inneren und der äußeren Mitnehmereinrichtung (1 und 2) zu Verhinderung eines Durchsackens über Führungsglieder (19) verlaufen.

4. Elevator nach einem der vorhergehenden Ansprüche, dadurch gekennzeichnet, daß das oberes Ende (25) der inneren Mitnehmereinrichtung (2) derart ausgebildet ist, daß es einen sich verbreiternden Ausgang (23, 26) darstellt, wodurch die Freigabe des körnigen Materials oder des landwirtschaftlichen Produkts an dem Auslaß (14) unterstützt wird, und daß die oberen Enden (25, 26) der inneren und der äusseren Mitnehmereinrichtung (1 und 2) mittels entsprechender im Abstand angeordneter Antriebsmittel (6, 9) gelagert und simultan antreibbar sind.

5. Elevator nach einem der vorhergehenden Ansprüche, dadurch gekennzeichnet, daß der Rampenabschnitt (11a) Teil eines Gehäuses (11) ist, das die beiden Mitnehmereinrichtungen (1, 2) mit Ausnahme des Einlasses (12) und des Auslasses (14) umschließt.

Fig.1.

Fig.2.

Fig.3.

0 026 993

Fig. 4.

Fig.5.

33   32   40

34

36

32

Fig.6.

43

42

34

35

37
38   33   12   41

40

0 026 993